# EUROPEAN PATENT APPLICATION

(11) **EP 4 620 887 A1**
(43) Date of publication of application: **24.09.2025**
(21) Application number: 23890628.3
(22) Date of filing: 03.11.2023
(51) Int. Cl.: B66C 13/16, B66C 13/22, B66C 13/46, B66C 13/48, B66C 15/00

(54) **POINT CLOUD-BASED LIFTING APPLIANCE SECONDARY ANCHORING METHOD, SYSTEM AND DEVICE, AND STORAGE MEDIUM**

(30) Priority: 16.11.2022 CN 202211461212
(71) Applicant: Shanghai Westwell Technology Co., Ltd., Shanghai 200050 (CN)
(72) Inventor: TAN, Limin, Shanghai 200050 (CN); SUN, Zuolei, Shanghai 200050 (CN); ZHOU, Xiaokai, Shanghai 200050 (CN); HUANG, Mei, Shanghai 200050 (CN)
(74) Representative: De Vries & Metman
(86) International application number: PCT/CN2023/129525
(87) International publication number: WO 2024/104192

(57) **Abstract**

A point cloud-based lifting appliance re-anchoring method, system (5) and device, and a storage medium. The method comprises the following steps: acquiring original point cloud data of a container above by means of at least one point cloud acquisition apparatus arranged at the front end or the rear end of a container carrying device (S110); obtaining spatial positions of a container surface and a lifting appliance from the point cloud data on the basis of a hoisting task (S120); taking the driving direction of the container carrying device as a first direction, and obtaining an offset along a driving direction of the container carrying device at least according to the hoisting task, a spatial position of a container end surface, and the spatial position of the lifting appliance (S130); and moving the container carrying device on the basis of the offset for re-anchoring (S140).

## Description

### TECHNICAL FIELD

The present disclosure relates to the technical field of hoisting alignment, and in particular, to a point cloud-based re-anchoring method, system and device for lifting spreaders, and a storage medium.

### BACKGROUND

In both traditional and intelligent ports, alignment is a crucial step in container transfer processes. Especially in intelligent ports, container lifting equipment such as quay cranes and yard cranes are being upgraded towards intelligence and automation, replacing previously manual processes of picking and placing containers. This imposes new requirements on alignment accuracy of unmanned vehicles.

It should be noted that information disclosed in the background is only intended to enhance understanding of the context of the present disclosure and may include details that are not considered prior art known to those of ordinary skill in the relevant technical field.

### SUMMARY

The present disclosure provides a point cloud-based re-anchoring method, system and device for lifting spreaders, and a storage medium, to address challenges in the prior art. The present disclosure enables self-localization of vehicles by fully leveraging edge information of cargo ships in scenarios such as when a cargo ship docks at a terminal and GPS positioning fails, thereby improving alignment accuracy between container trucks and quay cranes.

Embodiments of the present disclosure provide a point cloud-based re-anchoring method for lifting spreaders, including steps of: acquiring original point cloud data of a container above by at least one point cloud acquisition device mounted at a front end or a rear end of a container transport equipment; obtaining spatial positions of a lifting spreader and a surface of the container from the original point cloud data based on a lifting task; taking a traveling direction of the container transport equipment as a first direction, and obtaining an offset along the first direction based on at least the lifting task, the spatial position of the surface of the container, and the spatial position of the lifting spreader; and performing re-anchoring by moving the container transport equipment based on the offset.

In some embodiments, the method further includes: executing the step of acquiring the original point cloud data after the container transport equipment has reached a preset alignment zone and completed initial anchoring with the lifting spreader.

In some embodiments, in the step of acquiring the original point cloud data, two point cloud acquisition devices are respectively mounted at front and rear ends of the container transport equipment and both equipped with upward-facing fields of view, a placement position of the container is located between the two point cloud acquisition devices, and the lifting task includes task type information, container length information and target position information of the container based on a vehicle body.

In some embodiments, the step of obtaining the spatial positions includes: when the lifting task is container grasping, performing point cloud fitting on the original point cloud data to obtain a first spatial position of the surface of the container, and taking a highest point cloud located on the surface of the container as an upper edge position of the surface; performing point cloud fitting within a preset zone above the upper edge position of the surface to obtain a second spatial position of the lifting spreader exceeding beyond preset features of the lifting spreader.

In some embodiments, the step of obtaining the spatial positions further includes: when only point clouds of partial lifting spreader are obtained and the preset features of the lifting spreader are not acquired after performing point cloud fitting within the preset zone, obtaining a moving distance along the traveling direction of the container transport equipment by the surface of the container and spatial coordinates of outermost contour point clouds of the partial lifting spreader closest to the point cloud acquisition device, and then driving the container transport equipment to move based on the moving distance.

In some embodiments, the preset features of the lifting spreader include at least external vertical surfaces of the lifting spreader.

In some embodiments, the step of obtaining the offset includes: obtaining a preset calibration offset in the lifting task; obtaining the offset along the first direction, wherein the offset is a sum of the preset calibration offset and a distance between the spatial position of the surface of the container and the spatial position of the preset features of the lifting spreader.

In some embodiments, the step of performing the re-anchoring includes: the container transport equipment traveling based on the offset to align the lifting spreader with the container and complete the re-anchoring.

In some embodiments, the step of obtaining the spatial positions includes: when the lifting task is container placing and the container transport equipment is empty, performing point cloud fitting on the original point cloud data to obtain a first spatial position of the surface of the container.

In some embodiments, the step of obtaining the offset includes: obtaining a target surface position based on a preset center position of the container based the vehicle body and a length of the container in the lifting task, wherein a distance of the target surface position along the first direction is a difference between a distance of the preset center position of the container based the vehicle body along the first direction and half of the length of the container; obtaining the offset along the first direction based on a distance between the target surface position and the first spatial position of the surface of the container.

In some embodiments, the step of obtaining the spatial positions includes: when the lifting task is container placing and the container transport equipment already carries an existing container, performing point cloud fitting on the original point cloud data to obtain a first spatial position of a first surface of a to-be-placed container and a second spatial position of a second surface of the existing container, wherein the second surface is oriented in a same direction as the first surface.

In some embodiments, the step of obtaining the offset includes: obtaining a target surface position based on the second spatial position, a preset gap between containers in the lifting task, and a length of the container, wherein a distance of the second spatial position along the first direction is a sum of a distance of the target surface position along the first direction, the gap between the containers and the length of the container; obtaining the offset along the first direction based on a distance between the target surface position and the first spatial position of the surface of the container.

Embodiments of the present disclosure further provide a point cloud-based re-anchoring system for lifting spreaders, including: a point cloud data module configured to acquire original point cloud data of a container above by at least one point cloud acquisition device mounted at a front end or a rear end of a container transport equipment; a spatial detection module configured to obtain spatial positions of a lifting spreader and a surface of the container from the original point cloud data based on a lifting task; an offset acquisition module configured to take a traveling direction of the container transport equipment as a first direction, and obtain an offset along the first direction based on at least the lifting task, the spatial position of the surface of the container, and the spatial position of the lifting spreader; and a re-anchoring module configured to perform re-anchoring by moving the container transport equipment based on the offset.

Embodiments of the present disclosure further provide a point cloud-based re-anchoring device for lifting spreaders, including: a processor; a memory storing executable instructions for the processor; wherein the processor is configured to execute the executable instructions to perform the steps of the method described above.

Embodiments of the present disclosure further provide a computer-readable storage medium storing programs, wherein when the programs are executed by a processor, the steps of the method described above are performed.

The point cloud-based re-anchoring method, system and device for lifting spreaders, and the storage medium of the present disclosure calibrate equipment parameters by detecting real-time relative positional relationship between the lifting spreader and the container. This approach enhances system robustness, improves efficiency and safety of lifting operations.

### BRIEF DESCRIPTION OF THE DRAWINGS

By reading detailed description of non-limiting embodiments with reference to the following figures, other features, objectives and advantages of the present disclosure will become more apparent.
FIG. 1 is a flowchart of a point cloud-based re-anchoring method for lifting spreaders according to the present disclosure.
FIG. 2 is a schematic diagram illustrating an implementation process of the point cloud-based re-anchoring method for lifting spreaders according to the present disclosure.
FIGS. 3 to 5 are schematic diagrams illustrating an implementation scenario of the point cloud-based re-anchoring method for lifting spreaders according to the present disclosure.
FIG. 6 is a schematic diagram illustrating another implementation scenario of the point cloud-based re-anchoring method for lifting spreaders according to the present disclosure.
FIG. 7 is a schematic diagram illustrating yet another implementation scenario of the point cloud-based re-anchoring method for lifting spreaders according to the present disclosure.
FIG. 8 is a structural schematic diagram of a point cloud-based re-anchoring system for lifting spreaders according to the present disclosure.
FIG. 9 is a structural schematic diagram of a point cloud-based re-anchoring device for lifting spreaders according to the present disclosure.
FIG. 10 is a structural schematic diagram of a computer-readable storage medium according to an embodiment of the present disclosure.

### DETAILED DESCRIPTION

Embodiments of the present disclosure will be described in detail below with specific examples. Those skilled in the art can easily understand other advantages and effects of the present disclosure from the disclosed content. The present disclosure may also be implemented or applied in different specific embodiments, and details of the present disclosure can be variously modified or altered according to different viewpoints and application systems without departing from the spirit of the present disclosure. It should be noted that, where there is no conflict, the embodiments and features in the embodiments of the present disclosure can be combined with each other.

The following detailed description of the embodiments of the present disclosure is provided with reference to the accompanying drawings, so that those skilled in the art to which the present disclosure pertains can easily implement the present disclosure. The present disclosure may be embodied in many different forms and is not limited to the embodiments described herein.

In the representations of the present disclosure, terms such as "one embodiment", "some embodiments", "an example", "a specific example" and "some examples" mean that a particular feature, structure, material, or characteristic described in connection with the embodiment or example is included in at least one embodiment or example of the present disclosure. Moreover, the specific features, structures, materials and characteristics described may be combined in any suitable manner in one or more embodiments or examples. Furthermore, where there is no contradiction, those skilled in the art may combine and assemble different embodiments or examples of the present disclosure and features of different embodiments or examples.

In order to clearly explain the present disclosure, components irrelevant to the explanation have been omitted, and the same reference numerals are used for the same or similar components throughout the specification.

Throughout the specification, when an element is said to be "connected" to another element, this includes not only a situation of "direct connection" but also a situation of "indirect connection" where other elements are placed between them. Additionally, when an element is said to "include" a certain component, unless specifically stated otherwise, it does not exclude other components, but implies that other components may also be included.

When an element is said to be "on" another element, it can be directly on the other element or can have other elements in between. When specifically stating that an element is "directly" on another element, it means there are no elements in between.

Although the terms "first", "second", etc., are used in the present disclosure to denote various elements, these elements should not be limited by these terms. These terms are only used to distinguish one element from another, such as a first interface and a second interface. Moreover, as used in the present disclosure, the singular forms "a", "an", and "the" are intended to include the plural forms as well, unless the context clearly indicates otherwise. The meaning of "multiple" is two or more, unless otherwise specifically defined. It should further be understood that the terms "comprise" and "include" specify the presence of stated features, steps, operations, elements, components, items, types, and/or groups, but do not preclude the presence, occurrence, or addition of one or more other features, steps, operations, elements, components, items, types, and/or groups. The terms "or" and "and/or" as used herein are interpreted as inclusive, meaning any one or any combination. Therefore, "A, B, or C" or "A, B, and/or C" means any of the following: "A"; "B"; "C"; "A and B"; "A and C"; "B and C"; "A, B, and C". Exceptions to this definition arise only when combinations of elements, functions, steps, or operations are inherently mutually exclusive in some way.

Unless explicitly redefined herein, all technical and scientific terms used in this present disclosure have meanings commonly understood by those skilled in the relevant technical field. Terms defined in commonly used dictionaries are additionally interpreted to have meanings consistent with relevant technical literature and the present disclosure, as long as they are not defined, and should not be excessively interpreted as idealistic or overly formalistic meanings.

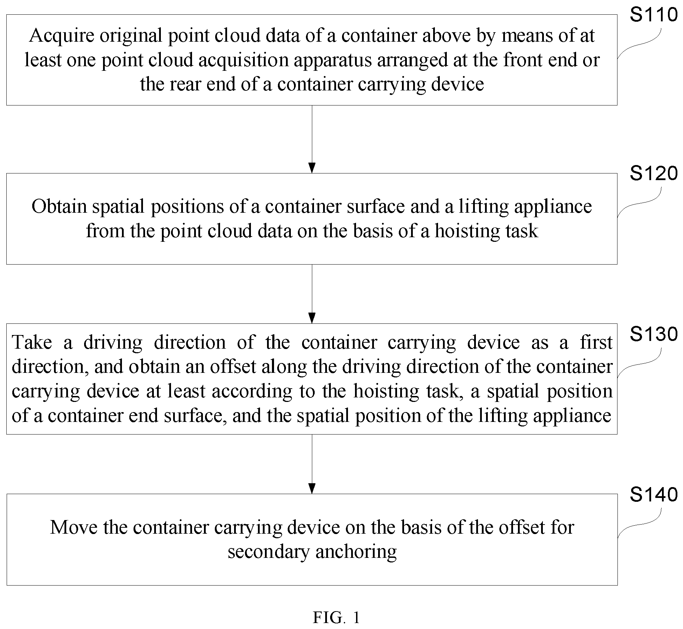

FIG. 1 is a flowchart of a point cloud-based re-anchoring method for lifting spreaders according to the present disclosure. As shown in FIG. 1, an embodiment of the present disclosure provides a point cloud-based re-anchoring method for lifting spreaders, including a step S120, a step S130, a step S140 and a step S150.

The step S120 includes: acquiring original point cloud data of a container above by at least one point cloud acquisition device mounted at a front end or a rear end of a container transport equipment.

The step S130 includes: obtaining spatial positions of a lifting spreader and a surface of the container from the original point cloud data based on a lifting task;
The step S140 includes: taking a traveling direction of the container transport equipment as a first direction, and obtaining an offset along the first direction based on at least the lifting task, the spatial position of the surface of the container, and the spatial position of the lifting spreader; and
The step S150 includes: performing re-anchoring by moving the container transport equipment based on the offset.

The present disclosure proposes a solution for precise alignment through spreader position detection. A purpose of initial alignment using common methods like equipment feature-based alignment or self-alignment, is to ensure that a vehicle reaches a predefined range around a correct alignment position, and guarantee that subsequent sensors, such as LiDAR, can detect point cloud data of both the lifting spreader and the container and maintain a safe alignment distance between the two. During a descent process of the lifting spreader, the present disclosure autonomously monitors a height and detects features of the lifting spreader to obtain a relative positional relationship between the lifting spreader and the container, and then the present disclosure transmits the offset to a downstream decision-making and execution module of the vehicle for secondary precise alignment.

In some embodiments, the point cloud-based re-anchoring method for lifting spreaders further includes: a step S110, the container transport equipment reaching a preset alignment zone and completing initial anchoring with the lifting spreader. And then, the step S120 is executed.

In some embodiments, in the step S120, two point cloud acquisition devices are respectively mounted at front and rear ends of the container transport equipment and both equipped with upward-facing fields of view, a placement position of the container is located between the two point cloud acquisition devices, and the lifting task includes task type information, container length information and target position information of the container based on a vehicle body.

In some embodiments, the step S130 includes a step S131 and a step S132. The step S131 includes: when the lifting task is container grasping, performing point cloud fitting on the original point cloud data to obtain a first spatial position of the surface of the container, and taking a highest point cloud located on the surface of the container as an upper edge position of the surface. The step S132 includes: performing point cloud fitting within a preset zone above the upper edge position of the surface to obtain a second spatial position of the lifting spreader exceeding beyond preset features of the lifting spreader.

In some embodiments, the step S132 includes: when only point clouds of partial lifting spreader are obtained and the preset features of the lifting spreader are not acquired after performing point cloud fitting within the preset zone, obtaining a moving distance along the traveling direction of the container transport equipment by the surface of the container and spatial coordinates of outermost contour point clouds of the partial lifting spreader closest to the point cloud acquisition device, and then driving the container transport equipment to move based on the moving distance.

In some embodiments, in the step S132, the preset features of the lifting spreader include at least external vertical surfaces of the lifting spreader.

In some embodiments, the step S140 includes a step S141 and a step S142. The step S141 includes: obtaining a preset calibration offset in the lifting task. The step S142 includes: obtaining the offset along the first direction, wherein the offset is a sum of the preset calibration offset and a distance between the spatial position of the surface of the container and the spatial position of the preset features of the lifting spreader.

In some embodiments, the step S150 includes: the container transport equipment traveling based on the offset to align the lifting spreader with the container and complete the re-anchoring.

In some embodiments, the step S130 includes: a step S133, when the lifting task is container placing and the container transport equipment is empty, performing point cloud fitting on the original point cloud data to obtain a first spatial position of the surface of the container.

In some embodiments, the step S140 includes a step S143 and a step S144. The step S143 includes: a step S143, obtaining a target surface position based on a preset center position of the container based the vehicle body and a length of the container in the lifting task, wherein a distance of the target surface position along the first direction is a difference between a distance of the preset center position of the container based the vehicle body along the first direction and half of the length of the container. The step S144 includes: obtaining the offset along the first direction based on a distance between the target surface position and the first spatial position of the surface of the container.

In some embodiments, the step S130 includes: a step S134, when the lifting task is container placing and the container transport equipment already carries an existing container, performing point cloud fitting on the original point cloud data to obtain a first spatial position of a first surface of a to-be-placed container and a second spatial position of a second surface of the existing container, wherein the second surface is oriented in a same direction as the first surface.

In some embodiments, the step S140 includes a step S145 and a step S146. The step S145 includes: obtaining a target surface position based on the second spatial position, a preset gap between containers in the lifting task, and a length of the container, wherein a distance of the second spatial position along the first direction is a sum of a distance of the target surface position along the first direction, the gap between the containers and the length of the container. The step S146 includes: obtaining the offset along the first direction based on a distance between the target surface position and the first spatial position of the surface of the container.

The present disclosure does not require modifications to port alignment equipment, such as cranes and spreaders. The present disclosure is not only applicable to conventional yard cranes and quay cranes but also to equipment with spreaders for picking and placing, such as overhead rail systems, providing higher versatility. Since the present disclosure detects the real-time relative positional relationship between the lifting spreader and the container, it does not require parameter calibration like CPS systems, thereby simplifying the deployment process.

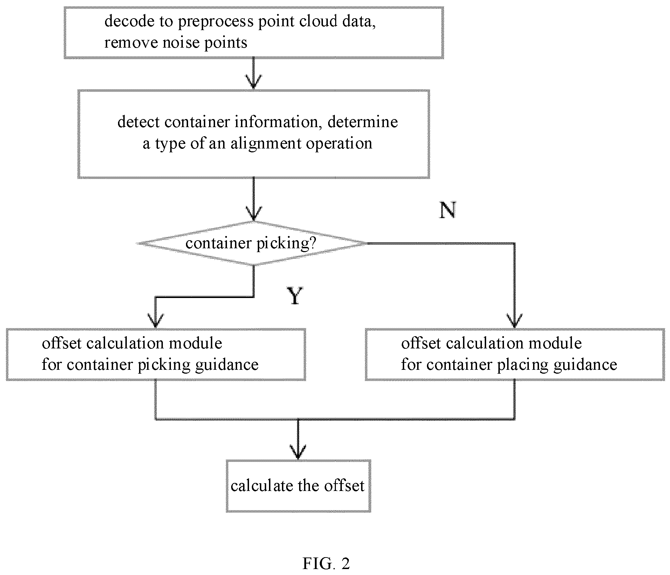

In an alignment task, there are generally two operations: container placing (the lifting spreader places the container onto the vehicle) and container picking (the lifting spreader picks the container off the vehicle). For the container picking operation, the present disclosure calculates the relative positional relationship between the lifting spreader and the container as an alignment offset; for the container placing operation, the present disclosure calculates the relative positional relationship between the container and the vehicle as an alignment offset. FIG. 2 is a schematic diagram of an implementation process of the point cloud-based re-anchoring method for lifting spreaders according to the present disclosure. As shown in FIG. 2, the present disclosure provides an accurate and robust calculation method to meet the requirements of both alignment operations, with the steps as follows.

Step 1, decode to preprocess point cloud data, remove noise points. Then transform the point cloud data to a vehicle coordinate system using a transformation matrix.

Step 2, determine a type of an alignment operation, identify whether it is a container picking operation or a container placing operation. Wherein the vehicle identifies the type based on a task container (front container/middle container/rear container) by detecting the presence of the task container, or the type may be provided by other modules such as FMS. Steps for the vehicle to identify the type are as follows.

For front containers and rear containers: acquire point cloud data of a ROI (region of interest) based on a preset relative position between the front container and the vehicle, and obtain vertical surface features of the front container or the rear container. If the vertical surface features are obtained, it is a container picking operation; otherwise, it is a container placing operation.

For middle containers: acquire point cloud data of a ROI area based on a preset relative position between the middle container and the vehicle, and obtain vertical surface features of the middle container. If both front and rear vertical surfaces are detected, it is a container picking operation; otherwise, it is a container placing operation.

Step 3, select different offset calculation modules depending on whether it is a container picking operation or a container placing operation to calculate the alignment offset.

Step 3.1, for the container picking operation:
Step (1), detect container information. Obtain the point cloud data of the ROI area of the front and rear surfaces of the container based on the preset relative position between the container and the vehicle. Fit the point cloud data of the vertical surface of the container, and take a certain proportion of the point cloud data in an outward direction of the surface as the edge of the surface. Calculate an average value as a position "Dist(container)" of the surface of the container. Take a maximum value of the point cloud data in a z-direction as a height of the container.

Step (2), detect feature positions of the lifting spreader. Obtain the point cloud data of the ROI area of the lifting spreader, based on the preset relative position between the lifting spreader and the vehicle and combined with the height of the lifting spreader and the container. Extract the features of the lifting spreader. Wherein the features of an outer vertical surface, an outer edge and a lower horizontal surface of the lifting spreader are needed. Take the outer vertical surface and the outer edge as a position "Dist(spreader)" of the lifting spreader.

Step (3), if the features of the lifting spreader cannot be detected in the step (2) but the point cloud data of the lifting spreader is present, it may be due to the container blocking the laser view. In this case, perform clustering on the point cloud data, take an outermost point "Dist(point)" of the clustered point cloud data, calculate an exit distance "Drive_offset" and transmit it to the downstream execution module, enabling the vehicle to move to a position where the features of the lifting spreader can be accurately detected and then repeat the step (2). A calculation method for the exit distance "Drive_offset" is: Drive_offset = Dist(point) - Dist(container) + Dist(visual). Wherein "Dist(visual)" is a preset difference between the surface of the container and the features of the lifting spreader when the laser can detect the features of the lifting spreader. A value range of "Dist(visual)" is determined by the laser's field of view.

Step (4), calculate a guidance offset. Given the positions of the lifting spreader and the container, a formula for calculating the guidance offset "Dist(offset)" is: Dist(offset) = Dist(spreader) - Dist(container) + Offset(calib). Wherein "Dist(offset)" is the guidance offset, "Dist(spreader)" is the position of the lifting spreader, "Dist(container)" is the position of the surface of the container, and "Offset(calib)" is the calibration difference between the positions of the lifting spreader and the container during the container picking operation. Generally, a value of "Offset(calib)" is 0.

Step 3.2, for the container placing operation:
Step (1), detect on-vehicle container information. For the front and rear containers in the alignment task, special cases such as placing a front container when a rear container is already present and placing a rear container when a front container is already present need to be considered. It is necessary to ensure a certain gap between containers to prevent safety accidents like container collisions. Obtain the point cloud data of the ROI area of the task container based on the relative positional relationship between the container and the vehicle, fit the vertical surface of the task container, and define a distance of a vertical surface (an adjacent vertical surface of the container already on the vehicle) close to the task container (the front container or the rear container) as "Dist(container_exist)". Taking the example where there is already a container at the front end of the truck and the target operation involves placing a container at the rear end, the position of the surface for the front container or the rear container to be operated is: Dist(container_plane) = Dis(container _exist) + Gap + length. Wherein "Dist(container_plane)" is the position of a target surface of a target container on the vehicle, "Gap" is a preset safety gap to prevent collisions, "length" is a preset length for the front or rear container.

Specifically, for a front container or a rear container or a middle container without another container present, the position of the target surface is: Dist(container_plane) = Dis(container_center) + length*0.5. Wherein "Dist(container_plane)" is the position of the target surface of the target container on the vehicle, "Dis(container_center)" is a preset center position of the container, "length" is the length of the container.

Step (2), detect bottom surface information of the target container. during the container placing process, the lifting spreader holds the container and lower together. At this time, it is necessary to align the relative positional relationship between the target container and the vehicle. Considering the lifting spreader and the target container as a whole, obtain the point cloud data of the ROI area based on the preset relative position relationship between the task container (front/middle/rear container) and the vehicle, fit the horizontal surface on the bottom and vertical surface of the container, and take an outer edge of the horizontal surface and the vertical surface as the position "Dist(container)" of the surface of target container.

Step (3), calculate the alignment offset. Given a position "Dist(container)" of a to-be-placed surface of the target container and a position "Dis(container _center)" of the target surface on the vehicle of the target container, a formula for calculating the guidance offset "Dist(offset)" is: Dist(offset) = Dist(container) - Dis(container_center).

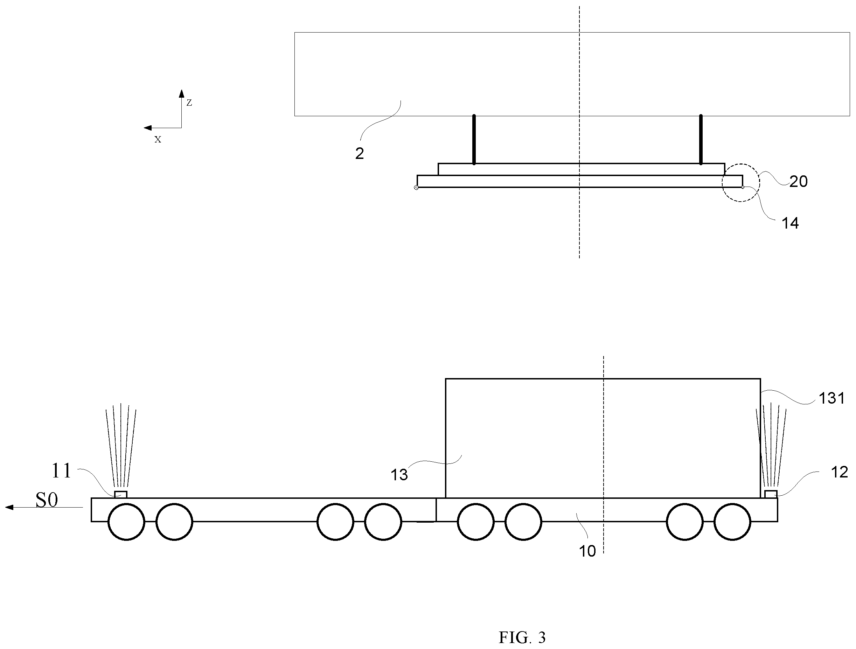

FIGS. 3 to 5 are schematic diagrams of an implementation scenario for the point cloud-based re-anchoring method for lifting spreaders according to the present disclosure. Referring to FIG. 3, when a truck 10 reached a preset alignment zone and completed initial anchoring with the lifting spreader, acquire original point cloud data of a container above by point cloud acquisition devices mounted at front and rear ends of the truck 10. Wherein a first point cloud acquisition device 11 is mounted at the front end of the truck 10, and a second point cloud acquisition device 12 is mounted at the rear end of the truck 10. Both the first point cloud acquisition device 11 and the second point cloud acquisition device 12 have an upward field of view. The placement position of a container 13 is between the two point cloud acquisition devices. The lifting task includes task type information, container length information and target position information of the container based on a vehicle body, and so on.

When the lifting task is container grasping, performing point cloud fitting on the original point cloud data acquired by the second point cloud acquisition device 12 to obtain a first spatial position 131 of the surface of the container, and taking a highest point cloud located on the surface of the container as an upper edge position of the surface.

When only point clouds of partial lifting spreader are obtained and the preset features of the lifting spreader are not acquired after performing point cloud fitting within the preset zone 20, it may be the laser view of the second point cloud acquisition device 12 being blocked by the container. As a solution, obtain a moving distance S0 along the traveling direction of the truck 10 by the surface of the container and spatial coordinates of outermost contour point clouds of the partial lifting spreader closest to the point cloud acquisition device, and then driving the truck 10 to move based on the moving distance.

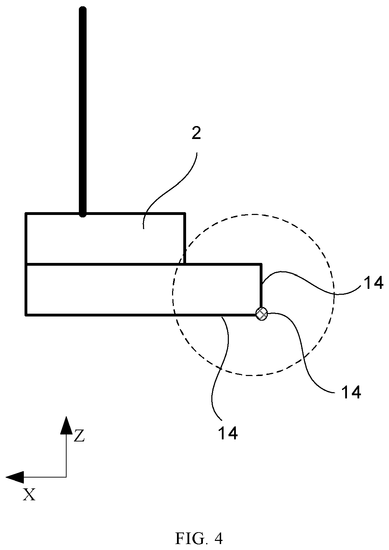

Referring to FIG. 4, perform point cloud fitting within a preset zone above the upper edge position of the surface to obtain a second spatial position of the lifting spreader exceeding beyond preset features of the lifting spreader. The preset features of the lifting spreader may include the outer vertical surface 15, the outer edge 14 and the lower horizontal surface 16. In this embodiment, the plane defined by the outer vertical surface 15 and the outer edge 14 is taken as the preset features of the lifting spreader.

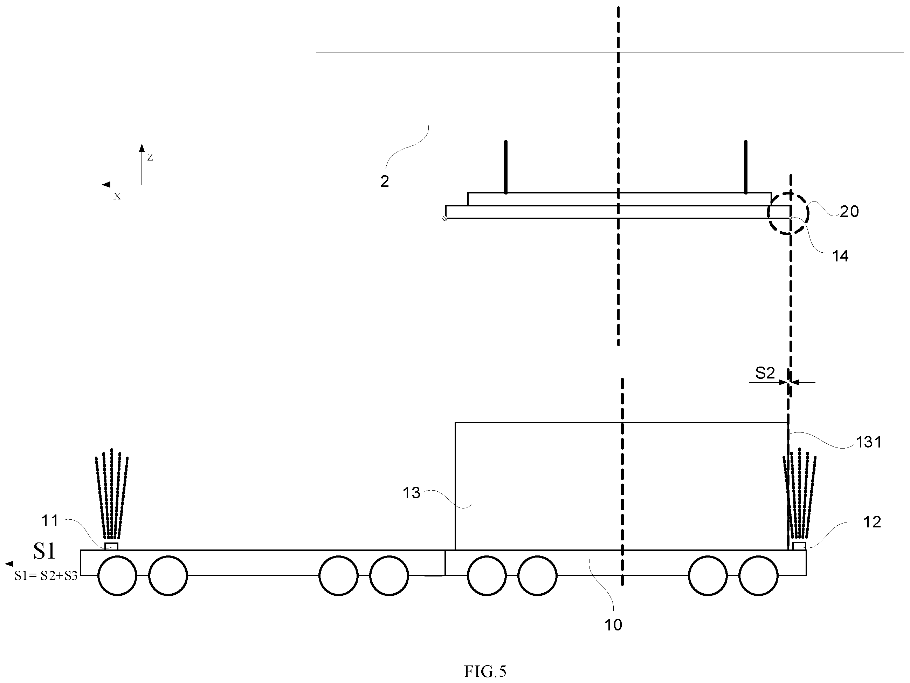

Referring to FIG. 5, obtain a preset calibration offset in the lifting task; obtain the offset S1 along the traveling direction of the truck 10, wherein the offset S1 is a sum of the preset calibration offset S3 and a distance S2 between the spatial position of the surface of the container and the spatial position of the preset features of the lifting spreader. S1=S2+S3. Finally, the truck 10 travels based on the offset S1 to align the lifting spreader with the container and complete the re-anchoring.

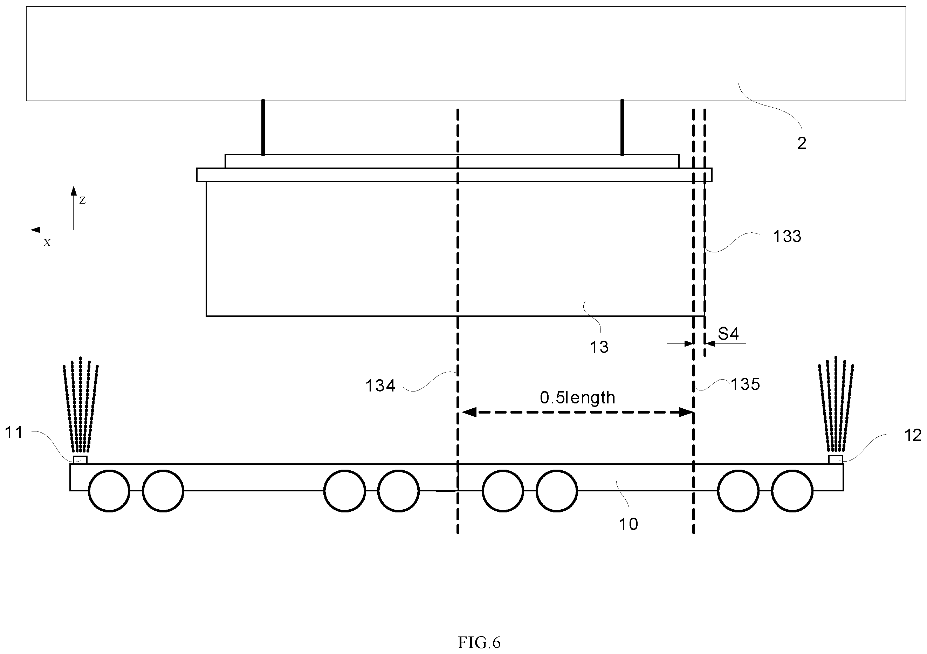

FIG. 6 is a schematic diagram of another implementation scenario of the point cloud-based re-anchoring method for lifting spreaders according to the present disclosure. Referring to FIG. 6, when the truck 10 reached a preset alignment zone and completed initial anchoring with the lifting spreader, acquire original point cloud data of a container above by point cloud acquisition devices mounted at front and rear ends of the truck 10. Wherein a first point cloud acquisition device 11 is mounted at the front end of the truck 10, and a second point cloud acquisition device 12 is mounted at the rear end of the truck 10. Both the first point cloud acquisition device 11 and the second point cloud acquisition device 12 have an upward field of view. The placement position of the container is between the two point cloud acquisition devices. The lifting task includes task type information, container length information and target position information of the container based on a vehicle body, and so on.

When the lifting task is container placing and the truck 10 is empty, performing point cloud fitting on the original point cloud data acquired by the second point cloud acquisition device 12 to obtain a first spatial position of a surface 133 of the container.

Obtain a target surface position 135 based on a preset center position 134 of the container based the vehicle body and a length "length" of the container in the lifting task, wherein a distance of the target surface position 135 along the first direction is a difference between a distance of the preset center position 134 of the container based the vehicle body along the first direction and half of the length "length" of the container.

Obtain an offset S4 in the traveling direction of the truck 10 based on the distance between the target surface position 135 and the first spatial position of the surface 133 of the container.

Finally, the truck 10 drives based on the offset S4 to align the spreader with the container, completing the re-anchoring.

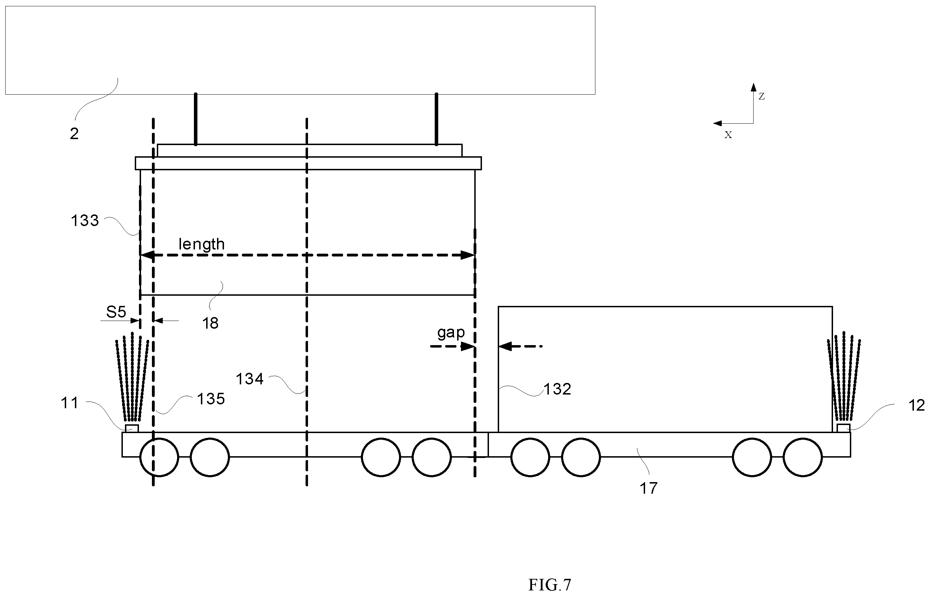

FIG. 7 is a schematic diagram of another implementation scenario of the point cloud-based re-anchoring method for lifting spreaders according to the present disclosure. Referring to FIG. 7, when the truck 10 reached a preset alignment zone and completed initial anchoring with the lifting spreader, acquire original point cloud data of a container above by point cloud acquisition devices mounted at front and rear ends of the truck 10. Wherein a first point cloud acquisition device 11 is mounted at the front end of the truck 10, and a second point cloud acquisition device 12 is mounted at the rear end of the truck 10. Both the first point cloud acquisition device 11 and the second point cloud acquisition device 12 have an upward field of view. The placement position of the container is between the two point cloud acquisition devices. The lifting task includes task type information, container length information and target position information of the container based on a vehicle body, and so on.

When the lifting task is container placing and the truck 10 already carries an existing container 17, perform point cloud fitting on the original point cloud data acquired by the first point cloud acquisition device 11 to obtain a first spatial position of a first surface 133 of a to-be-placed container 18 and a second spatial position of a second surface 132 of the existing container 17, wherein the second surface 132 is oriented in a same direction as the first surface 133.

In some embodiments, the first surface of the existing container 17 can be fitted using the second point cloud acquisition device 12, and the position of the second surface 132 can be obtained based on the first surface and the length of the container. Then, obtain a target surface position 135 based on the second spatial position, a preset gap between containers in the lifting task, and the length of the container. Wherein a distance of the target surface position 135 along the first direction is a result of the distance of the second spatial position along the first direction of the second surface 132 subtracting the gap between the containers and subtracting the length of the container.

Obtain the offset S5 in the traveling direction of the truck 10 based on the distance between the target surface position 135 and the first spatial position of the surface 133 of the container.

Finally, the truck 10 drives based on the offset S5 to align the spreader with the container, completing the re-anchoring.

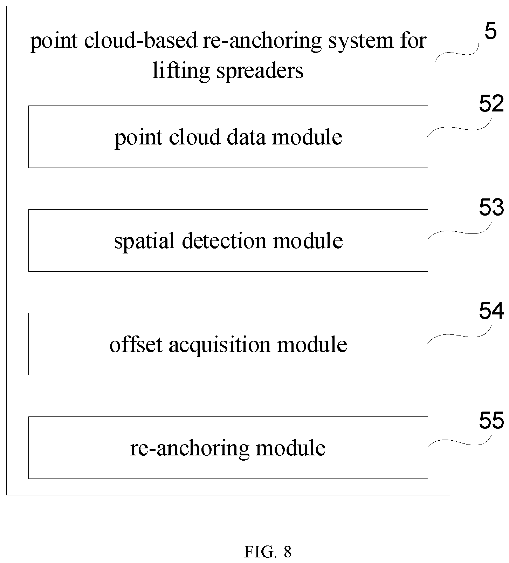

FIG. 8 is a schematic diagram of a structure of a point cloud-based re-anchoring system for lifting spreaders according to the present disclosure. As shown in FIG. 8, the system 5 includes:
an initial module configured to trigger a point cloud data module 52 after the container transport equipment has reached a preset alignment zone and completed initial anchoring with the lifting spreader;
the point cloud data module 52 configured to acquire original point cloud data of a container above by at least one point cloud acquisition device mounted at a front end or a rear end of a container transport equipment;
a spatial detection module 53 configured to obtain spatial positions of a lifting spreader and a surface of the container from the original point cloud data based on a lifting task;
an offset acquisition module 54 configured to take a traveling direction of the container transport equipment as a first direction, and obtain an offset along the first direction based on at least the lifting task, the spatial position of the surface of the container, and the spatial position of the lifting spreader; and
a re-anchoring module 55 configured to perform re-anchoring by moving the container transport equipment based on the offset.

**In** some embodiments, two point cloud acquisition devices are respectively mounted at front and rear ends of the container transport equipment and both equipped with upward-facing fields of view, a placement position of the container is located between the two point cloud acquisition devices, and the lifting task includes task type information, container length information and target position information of the container based on a vehicle body.

In some embodiments, the spatial detection module 53 is configured to: when the lifting task is container grasping, perform point cloud fitting on the original point cloud data to obtain a first spatial position of the surface of the container, and take a highest point cloud located on the surface of the container as an upper edge position of the surface; perform point cloud fitting within a preset zone above the upper edge position of the surface to obtain a second spatial position of the lifting spreader exceeding beyond preset features of the lifting spreader.

In some embodiments, the spatial detection module 53 is further configured to: when only point clouds of partial lifting spreader are obtained and the preset features of the lifting spreader are not acquired after performing point cloud fitting within the preset zone, obtain a moving distance along the traveling direction of the container transport equipment by the surface of the container and spatial coordinates of outermost contour point clouds of the partial lifting spreader closest to the point cloud acquisition device, and then drive the container transport equipment to move based on the moving distance.

In some embodiments, the preset features of the lifting spreader include at least external vertical surfaces of the lifting spreader.

In some embodiments, the offset acquisition module 54 is configured to: obtain a preset calibration offset in the lifting task; obtain the offset along the first direction, wherein the offset is a sum of the preset calibration offset and a distance between the spatial position of the surface of the container and the spatial position of the preset features of the lifting spreader.

In some embodiments, the re-anchoring module 55 is configured to: drive the container transport equipment to move based on the offset to align the lifting spreader with the container and complete the re-anchoring.

In some embodiments, the spatial detection module 53 is configured to: when the lifting task is container placing and the container transport equipment is empty, perform point cloud fitting on the original point cloud data to obtain a first spatial position of the surface of the container.

In some embodiments, the offset acquisition module 54 is configured to: obtain a target surface position based on a preset center position of the container based the vehicle body and a length of the container in the lifting task, wherein a distance of the target surface position along the first direction is a difference between a distance of the preset center position of the container based the vehicle body along the first direction and half of the length of the container; obtain the offset along the first direction based on a distance between the target surface position and the first spatial position of the surface of the container.

In some embodiments, the re-anchoring module 55 is configured to: when the lifting task is container placing and the container transport equipment already carries an existing container, perform point cloud fitting on the original point cloud data to obtain a first spatial position of a first surface of a to-be-placed container and a second spatial position of a second surface of the existing container, wherein the second surface is oriented in a same direction as the first surface.

In some embodiments, the offset acquisition module 54 is configured to: obtain a target surface position based on the second spatial position, a preset gap between containers in the lifting task, and a length of the container, wherein a distance of the second spatial position along the first direction is a sum of a distance of the target surface position along the first direction, the gap between the containers and the length of the container; obtain the offset along the first direction based on a distance between the target surface position and the first spatial position of the surface of the container.

The point cloud-based re-anchoring system for lifting spreaders provided by the present disclosure calibrates equipment parameters by detecting the real-time relative positional relationship between the lifting spreader and the container, which has high system robustness and improves the efficiency and safety of lifting operations.

Embodiments of the present disclosure also provide a point cloud-based re-anchoring device for lifting spreaders, including: a processor; a memory storing executable instructions for the processor; wherein the processor is configured to execute the executable instructions to perform the steps of the point cloud-based re-anchoring method for lifting spreaders.

As described above, the point cloud-based re-anchoring device for lifting spreaders calibrates equipment parameters by detecting the real-time relative positional relationship between the lifting spreader and the container, which has high system robustness and improves the efficiency and safety of lifting operations.

Technical personnel in the relevant field can understand that various aspects of this present disclosure can be implemented as systems, methods, or program products. Therefore, various aspects of the present disclosure can be specifically implemented in the following forms: a purely hardware implementation, a purely software implementation (including firmware, microcode, etc.), or a combined implementation of hardware and software. These can be collectively referred to as "circuits", "modules", or "platforms".

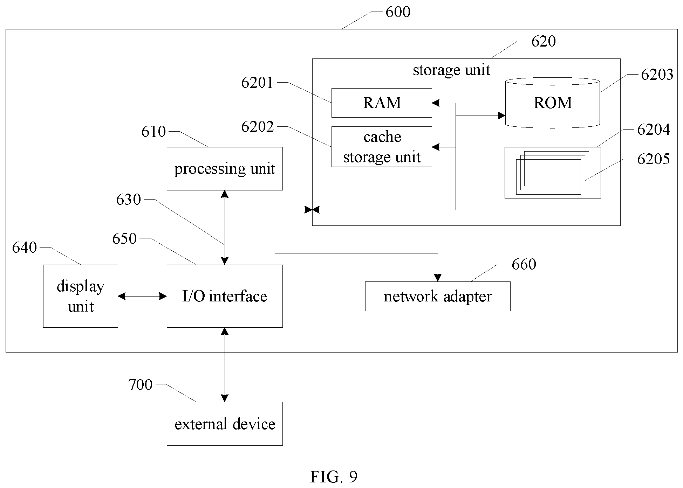

FIG. 9 is a schematic diagram of a structure of the point cloud-based re-anchoring device for lifting spreaders according to the present disclosure. An electronic device 600 (i.e., the point cloud-based re-anchoring device for lifting spreaders) according to the embodiments of the present disclosure will be described below with reference to FIG. 9. The electronic device 600 shown in FIG. 9 is merely an example and should not impose any limitation on the functionality and scope of use of the embodiments of the present disclosure.

As shown in FIG. 9, the electronic device 600 is presented in the form of a general-purpose computing device. Components of the electronic device 600 may include, but are not limited to, at least one processing unit 610, at least one storage unit 620, a bus 630 that connects various components including the storage unit 620 and the processing unit 610, a display unit 640, and so on.

The storage unit stores program code, which can be executed by the processing unit 610, enabling the processing unit 610 to perform the steps of the point cloud-based re-anchoring method for lifting spreaders of the specification according to various exemplary embodiments of the present disclosure. For example, the processing unit 610 can perform the steps shown in FIG. 1.

The storage unit 620 may include readable media in the form of volatile storage units, such as random access memory (RAM) 6201 and/or cache memory 6202, and may further include read-only memory (ROM) 6203.

The storage unit 620 may also include program/utilities 6204 with a set (at least one) of program modules 6205. Such program modules 6205 include, but are not limited to, an operating system, one or more application programs, other program modules, and program data, each or some combination of these examples may include implementations of a network environment.

The bus 630 may represent one or more of several types of bus structures, including a storage unit bus or storage unit controller, a peripheral bus, a graphics acceleration port, a processing unit, or a local bus using any of various bus structures.

The electronic device 600 may also communicate with one or more external devices 700 (e.g., keyboard, pointing device, Bluetooth device, etc.), and may also communicate with one or more devices that enable a user to interact with the electronic device 600, and/or with any device that enables the electronic device 600 to communicate with one or more other computing devices (e.g., router, modem, etc.). Such communication may occur via input/output (I/O) interfaces 650. Additionally, the electronic device 600 may communicate with one or more networks (e.g., local area network (LAN), wide area network (WAN), and/or public networks such as the Internet) through a network adapter 660. The network adapter 660 may communicate with other modules of the electronic device 600 via the bus 630. It should be understood that, although not shown in the figures, other hardware and/or software modules may be used in conjunction with the electronic device 600, including but not limited to: microcode, device drivers, redundant processing units, external disk drive arrays, RAID systems, tape drives, and data backup storage platforms, etc.

Embodiments of the present disclosure also provide a computer-readable storage medium for storing programs, wherein when the programs are executed by a processor, the steps of the point cloud-based re-anchoring method for lifting spreaders are performed. **In** some possible implementations, various aspects of the present disclosure can also be realized in the form of a program product, which includes program code that, when run on a terminal device, causes the terminal device to execute the steps of the re-anchoring method described in this specification according to various exemplary embodiments of the present disclosure.

As described above, when the programs stored in the computer-readable storage medium are executed, it can achieve: calibrating equipment parameters by detecting the real-time relative positional relationship between the lifting spreader and the container, providing high system robustness and improving the efficiency and safety of lifting operations.

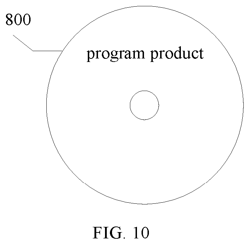

FIG. 10 is a schematic diagram of a structure of the computer-readable storage medium of the present disclosure. Referring to FIG. 10, a program product 800 for implementing the above method according to embodiments of the present disclosure is described. It may take the form of a portable compact disc read-only memory (CD-ROM) and include program code, which can run on terminal devices such as personal computers. However, the program product of the present disclosure is not limited to this. In this document, the readable storage medium can be any tangible medium that contains or stores a program, which can be used by or in combination with an instruction execution system, apparatus, or device.

The program product can take the form of any combination of one or more readable media. A readable medium may be a readable signal medium or a readable storage medium. A readable storage medium may include, but is not limited to, an electrical, magnetic, optical, electromagnetic, infrared, or semiconductor system, apparatus, or device, or any combination thereof. More specific examples of readable storage media (a non-exhaustive list) include: electrical connections with one or more wires, portable disks, hard drives, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

A computer-readable storage medium may include a propagated data signal embodied in baseband or as part of a carrier wave, which contains readable program code. Such a propagated data signal may take various forms, including but not limited to electromagnetic signals, optical signals, or any suitable combination of the above. A readable medium may also be any readable medium other than a readable storage medium, which can transmit, propagate, or carry the program for use by or in connection with an instruction execution system, apparatus, or device. The program code contained on a readable storage medium can be transmitted using any suitable medium, including but not limited to wireless, wired, optical fiber, RF, and so on, or any suitable combination of the above.

The program code for performing operations of the present disclosure can be written in any combination of one or more programming languages, including object-oriented programming languages such as Java, C++, and conventional procedural programming languages such as the "C" language or similar programming languages. The program code may execute entirely on the user's computing device, partly on the user's device, as a standalone software package, partly on the user's computing device and partly on a remote computing device, or entirely on a remote computing device or server. In the case of remote computing devices, they may be connected to the user's computing device via any type of network, including local area networks (LAN) or wide area networks (WAN), or may be connected to external computing devices (e.g., through an Internet service provider to connect over the Internet).

As discussed above, the point cloud-based re-anchoring method, system and device for lifting spreaders, and the storage medium of the present disclosure calibrate equipment parameters by detecting the real-time relative positional relationship between the lifting spreader and the container, providing high system robustness and improving the efficiency and safety of lifting operations.

The above content provides a further detailed description of the present disclosure in connection with specific preferred embodiments, and it should not be construed that the specific implementations of the present disclosure are limited solely to these descriptions. For those of ordinary skill in the art to which this present disclosure pertains, several simple deductions or substitutions can be made without departing from the spirit of the present disclosure, which should be considered as falling within the scope of the present disclosure.

## Claims

1. A point cloud-based re-anchoring method for lifting spreaders, **characterized by** comprising steps of:
acquiring original point cloud data of a container above by at least one point cloud acquisition device mounted at a front end or a rear end of a container transport equipment;
obtaining spatial positions of a lifting spreader and a surface of the container from the original point cloud data based on a lifting task;
taking a traveling direction of the container transport equipment as a first direction, and obtaining an offset along the first direction based on at least the lifting task, the spatial position of the surface of the container, and the spatial position of the lifting spreader; and
performing re-anchoring by moving the container transport equipment based on the offset.

2. The method according to claim 1 further comprising:
executing the step of acquiring the original point cloud data after the container transport equipment has reached a preset alignment zone and completed initial anchoring with the lifting spreader.

3. The method according to claim 1, wherein in the step of acquiring the original point cloud data, two point cloud acquisition devices are respectively mounted at front and rear ends of the container transport equipment and both equipped with upward-facing fields of view, a placement position of the container is located between the two point cloud acquisition devices, and the lifting task comprises task type information, container length information and target position information of the container based on a vehicle body.

4. The method according to claim 3, wherein the step of obtaining the spatial positions comprises:
when the lifting task is container grasping, performing point cloud fitting on the original point cloud data to obtain a first spatial position of the surface of the container, and taking a highest point cloud located on the surface of the container as an upper edge position of the surface;
performing point cloud fitting within a preset zone above the upper edge position of the surface to obtain a second spatial position of the lifting spreader exceeding beyond preset features of the lifting spreader.

5. The method according to claim 4, wherein the step of obtaining the spatial positions further comprises:
when only point clouds of partial lifting spreader are obtained and the preset features of the lifting spreader are not acquired after performing point cloud fitting within the preset zone, obtaining a moving distance along the traveling direction of the container transport equipment by the surface of the container and spatial coordinates of outermost contour point clouds of the partial lifting spreader closest to the point cloud acquisition device, and then driving the container transport equipment to move based on the moving distance.

6. The method according to claim 4, wherein the preset features of the lifting spreader comprise at least external vertical surfaces of the lifting spreader.

7. The method according to claim 4, wherein the step of obtaining the offset comprises:
obtaining a preset calibration offset in the lifting task;
obtaining the offset along the first direction, wherein the offset is a sum of the preset calibration offset and a distance between the spatial position of the surface of the container and the spatial position of the preset features of the lifting spreader.

8. The method according to claim 4, wherein the step of performing the re-anchoring comprises:
the container transport equipment traveling based on the offset to align the lifting spreader with the container and complete the re-anchoring.

9. The method according to claim 3, wherein the step of obtaining the spatial positions comprises:
when the lifting task is container placing and the container transport equipment is empty, performing point cloud fitting on the original point cloud data to obtain a first spatial position of the surface of the container.

10. The method according to claim 9, wherein the step of obtaining the offset comprises:
obtaining a target surface position based on a preset center position of the container based the vehicle body and a length of the container in the lifting task, wherein a distance of the target surface position along the first direction is a difference between a distance of the preset center position of the container based the vehicle body along the first direction and half of the length of the container;
obtaining the offset along the first direction based on a distance between the target surface position and the first spatial position of the surface of the container.

11. The method according to claim 3, wherein the step of obtaining the spatial positions comprises:
when the lifting task is container placing and the container transport equipment already carries an existing container, performing point cloud fitting on the original point cloud data to obtain a first spatial position of a first surface of a to-be-placed container and a second spatial position of a second surface of the existing container, wherein the second surface is oriented in a same direction as the first surface.

12. The method according to claim 11, wherein the step of obtaining the offset comprises:
obtaining a target surface position based on the second spatial position, a preset gap between containers in the lifting task, and a length of the container, wherein a distance of the second spatial position along the first direction is a sum of a distance of the target surface position along the first direction, the gap between the containers and the length of the container;
obtaining the offset along the first direction based on a distance between the target surface position and the first spatial position of the surface of the container.

13. A point cloud-based re-anchoring system for lifting spreaders, **characterized by** comprising:
a point cloud data module conFIG.d to acquire original point cloud data of a container above by at least one point cloud acquisition device mounted at a front end or a rear end of a container transport equipment;
a spatial detection module conFIG.d to obtain spatial positions of a lifting spreader and a surface of the container from the original point cloud data based on a lifting task;
an offset acquisition module conFIG.d to take a traveling direction of the container transport equipment as a first direction, and obtain an offset along the first direction based on at least the lifting task, the spatial position of the surface of the container, and the spatial position of the lifting spreader; and
a re-anchoring module conFIG.d to perform re-anchoring by moving the container transport equipment based on the offset.

14. A point cloud-based re-anchoring device for lifting spreaders, comprising:
a processor;
a memory storing executable instructions for the processor;
wherein the processor is conFIG.d to execute the executable instructions to perform the steps of the method as claimed in any one of claims 1 to 12.

15. A computer-readable storage medium storing programs, wherein when the programs are executed by a processor, the steps of the method as claimed in any one of claims 1 to 12 are performed.
